# EUROPEAN PATENT APPLICATION

(11) **EP 1 980 718 A1**
(43) Date of publication of application: **15.10.2008**
(21) Application number: 08250901.9
(22) Date of filing: 15.03.2008
(51) Int. Cl.: F01D 11/00, F16J 15/32

(54) **A seal arrangement**

(30) Priority: 14.04.2007 GB 0707224
(71) Applicant: Rolls-Royce plc, 65 Buckingham Gate London SW1E 6AT (GB)
(72) Inventor: Williams, David Stephen, Chesterfield, Derbyshire S40 3HS (GB)
(74) Representative: Gunn, Michael Alan

(57) **Abstract**

Leaf seal arrangements 1 are known in which a number of leaf seals 2 are presented in a housing 3 in order to create a seal relative to a rotating surface 4. Conventional arrangements 21 have the leaf seals 2 aligned with an axis of rotation for the rotating surface 4, there is symmetrical lift up and blow down of a tip end 5 relative to the surface 4. In such circumstances the arrangement 1 is dependent upon the seal 2 stiffness to achieve designed operational performance. By presenting leaf seals 22 at an askew angle relative to an axis of rotation RR asymmetric deflection is achieved between an inlet side 30 and an exit side 31 such that the inlet and exit flow areas change and therefore lift up/blow down forces can be controlled to achieve a more optimal positioning of a tip end 25 relative to a rotating surface for operational performance with reduced risk of wear upon the leaf seals 22.

## Description

The present invention relates to a seal arrangement and more particularly to so called leaf seal arrangements utilised to provide a seal about a rotating component between a high pressure side and relatively low pressure side.

Traditionally seal arrangements have been provided utilising brush seals which achieve a close clearance and radially compliant seal about a rotating component. A disadvantage with a brush seal is that the bristles at high differential pressures exhibit two forms of behaviour which may limit their operational life. Firstly, during a so called blow down condition the bristles are caused to rub hard against the rotor whilst the tendency of the pressure force to lock the bristles against a sealed backing ring again limits flexibility with regard to movement in order to accommodate rotor component excursions. These effects upon bristle seal arrangements can cause premature wear of the seal and reduce its effective life.

More recently leaf seals have been designed to address the limitations of brush seal arrangements and particularly with respect to excessive wear. Leaf seals essentially comprise metal leaves which are substituted for bristles in a seal arrangement. The leaves are compliant in a radial direction but stiff in the axial direction. In such circumstances there is a reduction in the tendency for the leaf seal to lock in position as pressure is applied and therefore wearing of the leaves is reduced.

U.K. patent application No. 99300090.0 (Rolls Royce) shows a basic leaf seal arrangement design in which the leaf seal elements are of a rectangular nature and presented appropriately towards the surface of a rotating component. In such circumstances as described above the leaves are compliant in the radial direction, that is to say perpendicular to an axis of rotation of the rotating component whilst stiff through the axial width of the leaves in the axial direction.

In accordance with the present invention there is provided a seal arrangement for a rotating component, the arrangement comprising a plurality of leaf seals projecting radially inward towards a rotating surface at a skew angle away from alignment with an axis of rotation for the rotating surface.

Generally, the arrangement has a relatively high pressure on one side compared to the other side of the leaf seals in use.

Normally, the leaf seals have a substantially rectangular cross section. Alternatively, the leaf seals have a chamfered edge or corner.

Possibly, the leaf seals have a clearance gap between the rotating surface through which there is a fluid flow in use which may deflect the leaf seals. Possibly, the skew angle is determined to provide a desired asymmetric deflection of the leaf seals. Advantageously, the asymmetric deflection alters an inlet flow area relative to an exit flow area of the leaf seals.

Alternatively, or additionally, the asymmetric deflection shifts axial positioning of tip end of the leaf seals relative to the rotating surface.

Generally, the leaf seals are presented in a housing about the rotating surface and juxtaposed next to each other.

Possibly, the leaf seals are arranged to engage a front or cover plate of the housing in order to bias the leaf seals towards lift up when subject in use to a cross flow due to a pressure differential and the bias towards lift up is limited by the skew angle providing engagement with a backing plate of the housing to precipitate blow down of the leaf seals.

Additionally, the value of the skew angle is determined to provide balance between lift up and blow down of the leaf seals in use.

An embodiment of the present invention will now be described by way of example with reference to the accompanying drawings in which:
Fig. 1 provides a schematic illustration of a prior seal arrangement utilising leaf seals in a non-displaced and a displaced operational condition; and,
Fig. 2 is a schematic illustration of a seal arrangement in accordance with the present invention in a non displaced and displaced operational condition.

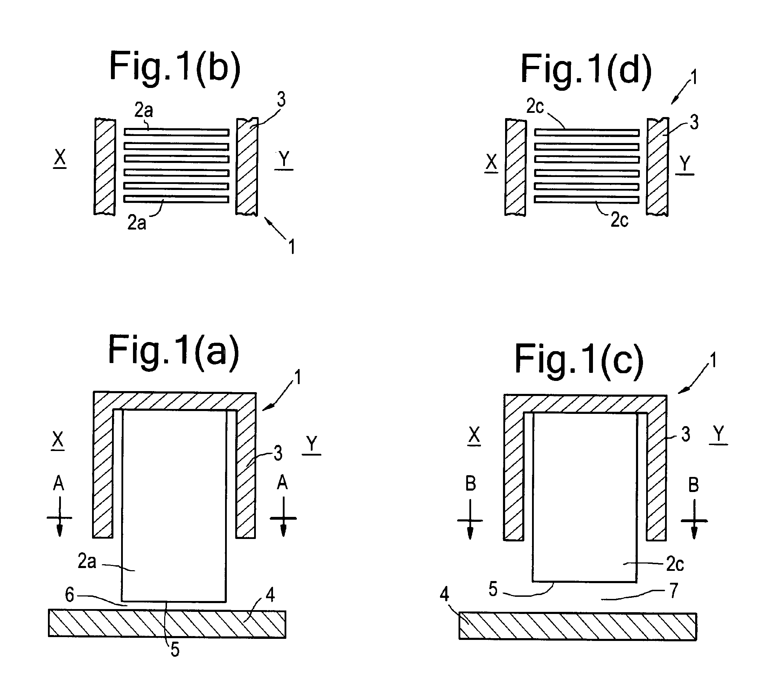

As indicated above, leaf seal arrangements are known. Thus, as illustrated in Fig. 1 a conventional seal arrangement 1 comprises a plurality of leaf seals 2 which are secured in a housing 3 relative to a rotating surface 4. The operational position of the arrangement 1 is depicted in its non displaced state, that is to say where deflection of the leaf seals 2 has not occurred in Figs. 1a, 1b whilst in Figs. 1c, 1d deflection of the leaf seals 2 is caused by fluid flow in use across the leaf seals 2. Fig. 1b illustrates in schematic plan view the leaf seals 2a in the cross-section AA depicted in Fig. 1a. The leaf seals are of a conventional rectangular cross-section and, as can be seen, a bottom tip end 5 is presented towards the rotating surface 4. A clearance gap 6 is chosen to limit the leakage fluid flow across the seal arrangement 1 from a high pressure side X to a low pressure side Y. Lift off and blow down characteristics are primarily controlled by axial gaps between the leaf seals 2 and the housing 3. Furthermore, the leaf seal 2 has lift up and blow down characteristics which are influenced by fluid flow entry and exit constraints presented by the end 5 relative to the surface 4 which in turn affects the clearance gap 6.

In a conventional arrangement depicted in Fig. 1 the entry and exit constraints are governed by the radial and axial clearance of the leaf seals 2. As indicated in use there will generally be a high pressure differential between side X and side Y which drives a fluid flow across the leaf seal surface and between axial gaps between leaf seals in the housing of this fluid flow which in turn deflects the leaf seals 2. As the leaf seal 22 flexes or is deflected by the fluid flow in a conventional leaf seal arrangement 1 as depicted in Fig. 1 the fluid entry or exit conditions remain essentially constant so the radial aero dynamic forces are also constant and balanced across the leaf stiffness at deflection.

In the above circumstances, as can be seen in a comparison between respectively Fig. 1a with Fig. 1c and Fig. 1b and Fig. 1d, it will be noted that the leaf seals 2 are deflected and flexed from an un-displaced configuration in Fig. 1a and Fig. 1b shown as the leaf seals 2a and the displaced or flexed leaf seals 2c shown in Fig. 1c and Fig. 1d. In such circumstances a displaced clearance gap 7 is created between the bottom of the displaced leaf seal 2c and the rotating surface 4.

In the conventional arrangement 1 depicted in Fig. 1 it will be appreciated that there is symmetry in the deflection of the leaf seals 2. There is no active control in order to optimise the wear characteristics and performance for the arrangement 1. Ideally, control should be provided to use the fluid flow in order to adjust the seal lift deflection for good performance in terms of wear and sealing efficiency. Such control relates to the clearance for flow between leaves and their housing and as well as across leaves in the gaps between them as well as in relation to the leaf tip edge 5 load pressure which will be presented to the rotating surface 4 in terms of lift up or blow down characteristics.

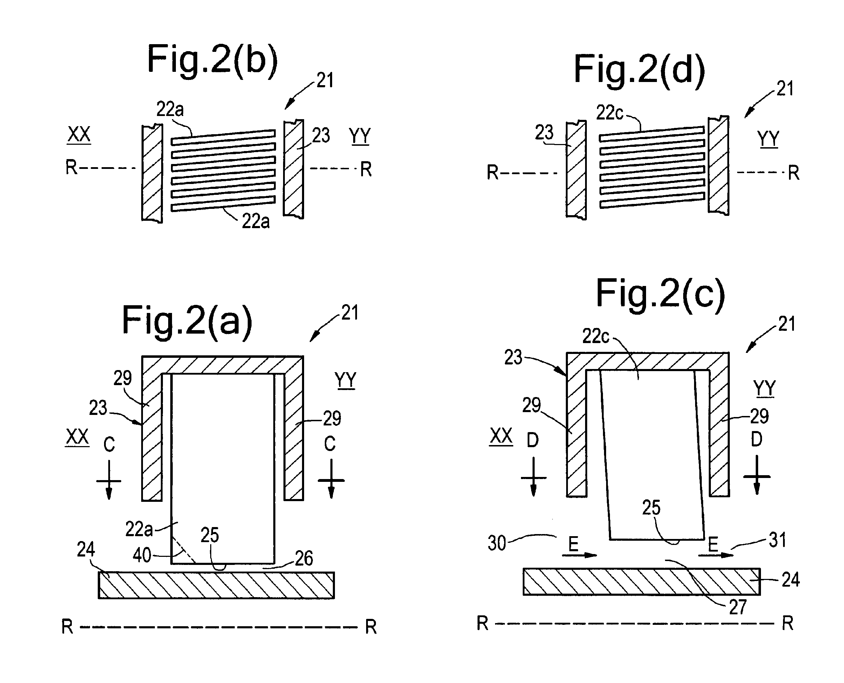

Fig. 2 illustrates a seal arrangement 21 in accordance with the present invention. Thus, as previously leaf seals 22 have a generally rectangular cross-section which projects radially towards a rotating surface 24 in a housing 23. Fig. 2b relates to a cross-section in the direction CC depicted in Fig. 2a, whilst Fig. 2d relates to a cross section DD depicted in Fig. 2c. In such circumstances in radially projecting seals 22 towards the surface 24 the arrangement 21 depicted in Fig. 2 is similar to that depicted in Fig. 1. However, it will be noted that the leaf seals 22 are configured at an askew angle relative to an axis of rotation R-R for the surface 24. In such circumstances the deflection characteristics are different with the present arrangement.

As the leaf seals 22 are no longer aligned with the axis of rotation RR, it will be understood that deflecting each individual leaf 22 will increase or decrease the clearance between the leaf seal 22 and cover plates 29 of the housing 23. In short, the fluid flow through the gap between leaves and with the housing 23 will cause asymmetric deflection of the leaf seals 22 between an inlet side 30 and an outlet side 31. Thus, the inlet and exit flow areas will change and the lift up/blow down forces can be controlled to provide an optimum running position for the leaf seals 22 as an assembly about the surface 24.

By presenting leaf seals at an askew angle relative to an axis of rotation R R asymmetric deflection is achieved between an inlet side and an exit side such that the inlet and exit flow areas change and therefore lift up/blow down forces can be controlled to achieve a more optimal positioning of a tip end relative to a rotating surface for operational performance with reduced risk of wear upon the leaf seals.

Fig. 2a and Fig. 2b illustrates the seal arrangement 21 in a non displaced position in which the arrangement 21 is at rest or there is insufficient fluid or pressure differential between a high pressure side XX and a low pressure side YY. In such circumstances, as can be seen, a clearance 26 between the tip end 25 and the surface 24 is controlled in order to provide an effective seal with only marginal leakage through the gap 26 across the arrangement 21 between the high pressure side XX and the low pressure side YY. There is limited leakage flow and of a relatively low force such that the skew angle or tilt of the leaf seals 22a causes no deflection or displacement of the leaf seals 22.

When there is sufficient pressure differential between side XX and side YY across the arrangement 21 there will be more driving forces as a result of the fluid flow between leaves and the leaves and the housing to cause deflection of the leaf seals 22c. This deflection is due to the askew presentation of the leaf seals 22c to the axis for rotation R-R. It will be understood that if a leaf positioned in abutment with the cover or front plate 29 of a housing it will tend to lift up even without an askew presentation angle due to turning in the flow. However, if the leaf is pushed against a backing plate of a housing it will tend to blow down causing wear. Provision of an askew angle allows assembly with the leaf in an initial first position, that is to say with the leaf against the front plate, but if lift up becomes excessive cause blow down by premature (in comparison with prior arrangements) engagement with the backing plate. The askew presentation also causes a drag on the flow which alters the clearance gap between the leaves 22 and cover plate 29 such that the tip end 25 may be displaced from the inlet side 30 towards the outlet side 31. In. such circumstances by judicious choice of the skew angle of the leaf seals 22 relative to the axis of rotation it will be understood that it is possible to control, and provide an optimum operational position for the leaf seals 22 in use.

It will be understood that the askew angle will be dependent upon the materials and flexibility of the leaf seals 22. As indicated above, wear resistance and achievement of an acceptable seal with a seal arrangement can be counter intuitive. However, by provision of an askew angle relative to the axis of rotation RR it will be understood that a further controlled parameter is provided to allow specific adjustment to achieve optimum performance for design which extends the feasible performance criteria for acceptable materials and leaf seal thicknesses.

It will be understood that the individual leaf seals 22c will flex through the fluid flow in the clearance 27 as well as the spacing between the leaf seals 22. Essentially, by providing an askew angle for the leaf seals 22 it will be appreciated that fluid flow X in the gap or spacing between the leaf seals 22 is deflected by entrainment but the flow X presents loadings from the individual leaf seals 22 which cause distortion across the leaf seals 22 from the inlet side 30 to the exit side 31. In such circumstances the leaf thickness in the arrangement 21 of the present invention is not only used radially but also axially in displacing the tip end 25 and therefore as indicated provides a further approach with respect to controlling tip end 25 position and therefore good sealing performance with minimal risk of wear on the leaf seals 22 in contact with the rotating source 24.

Modifications and alterations to the present invention will be understood by those skilled in the art. Thus, rather than providing rectangular leaf seals as described above it will be appreciated that the leaf seals may be profiled and non-rectangular in shape. In such circumstances, the leaf seal may have a chamfered or truncated corner removed at an askew angle in order to further enhance the leaf deflection and control.

Such chamfering of the edge or corner of a leaf seal is illustrated by potential removal of part of the leaf seal along an edge depicted by broken line 40 in Fig. 2. Thus, the leading edge of the leaf seal might have a differing operational performance in comparison with a substantially rectangular leaf seal element.

## Claims

1. A seal arrangement (21) for a rotating component, the arrangement comprising a plurality of leaf seals (22) projecting radially inward towards a rotating surface (24) at a skew angle away from alignment with an axis of rotation (R-R) for the rotating surface (24).

2. An arrangement as claimed in claim 1 wherein the arrangement has a relatively high pressure on one side compared to the other side of the leaf seals in use.

3. An arrangement as claimed in claim 1 or claim 2 wherein the leaf seals have a substantially rectangular cross section.

4. An arrangement as claimed in claim 1 or claim 2 where the leaf seals have a chamfered edge or corner.

5. An arrangement as claimed in any preceding claim wherein the leaf seals have a clearance gap between the leaf seals and the rotating surface through which there may be a fluid flow in use which may deflect the leaf seals.

6. An arrangement as claimed in any preceding claim wherein the askew angle is determined to provide a desired asymmetric deflection of the leaf seals.

7. An arrangement as claimed in claim 6 wherein the asymmetric deflection alters an inlet flow area relative to an exit flow area of the leaf seals.

8. An arrangement as claimed in claim 6 or claim 7 wherein the asymmetric deflection shifts axial positioning of tip end of the leaf seals relative to the rotating surface.

9. An arrangement as claimed in any preceding claim wherein the leaf seals are presented in a housing about the rotating surface and juxtaposed next to each other.

10. An arrangement as claimed in claim 9 wherein the leaf seals are arranged to engage a front or cover plate of the housing in order to bias the leaf seals towards lift up when subject in use to a cross flow due to a pressure differential and the bias towards lift up is limited by the skew angle providing engagement with a backing plate of the housing to precipitate blow down of the leaf seals.

11. An arrangement as claimed in claim 10 wherein the value of the skew angle is determined to provide balance between lift up and blow down of the leaf seals in use.

12. A gas turbine engine incorporating a seal arrangement as claimed in any preceding claim.
